**Europäisches Patentamt**

**European Patent Office**

**Office européen des brevets**

(19)

(11) **EP 1 188 558 A2**

(12) **EUROPÄISCHE PATENTANMELDUNG**

| | |
|---|---|
| (43) Veröffentlichungstag:<br>**20.03.2002 Patentblatt 2002/12** | (51) Int Cl.$^7$: **B32B 27/36** |

(21) Anmeldenummer: **01120760.2**

(22) Anmeldetag: **07.09.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **15.09.2000 DE 10045602**

(71) Anmelder: **Mitsubishi Polyester Film GmbH**
**65203 Wiesbaden (DE)**

(72) Erfinder:
• **Müller, Harald, Dr.**
**65232 Taunusstein (DE)**

• **Murschall, Ursula, Dr.**
**55283 Nierstein (DE)**
• **Bennett, Cynthia, Dr.**
**55232 Alzey (DE)**

(74) Vertreter: **Schweitzer, Klaus, Dr. et al**
**Patentanwaltskanzlei Zounek,**
**Industriepark Kalle-Albert,**
**Gebäude H391**
**Rheingaustrasse 190-196**
**65174 Wiesbaden (DE)**

(54) **Magnetbandträgerfolie mit niedrigem Skew**

(57) Die Erfindung betrifft eine ein- oder mehrschichtige biaxial orientierte Folie, die überwiegend aus einem kristallisierbaren, thermoplastischen Polyester aufgebaut ist und eine Gesamtdicke im Bereich von 4 bis 25 μm besitzt. Die mit einer Magnetbeschichtung beschichtete Folie besitzt erfindungsgemäß einen Skew-Wert von kleiner/gleich 1 ‰, vorzugsweise kleiner/ gleich 0,8 ‰, insbesondere kleiner/ gleich 0,7 ‰. Die Erfindung betrifft auch ein Verfahren zum Herstellen dieser Folie bei dem der thermoplastische Polyester in einem Extruder aufgeschmolzen, durch eine Breitschlitzdüse extrudiert und anschließend zur Vorfolie abgeschreckt wird. Die Vorfolie wird danach gestreckt, die gestreckte Folie wird thermofixiert und die thermofixierte Endfolie wird schließlich gesäumt und aufgewickelt. Nach dem Aufwickeln wird die Folienrolle erfindungsgemäß einer Alterung unterzogen.

**EP 1 188 558 A2**

## Beschreibung

Die Erfindung betrifft eine ein- oder mehrschichtige biaxial orientierte Folie, die überwiegend aus einem kristallisierbaren, thermoplastischen Polyester aufgebaut ist, mit einer Gesamtdicke im Bereich von 4 bis 24 μm. Die Folie zeichnet sich dadurch aus, dass sie nach dem Aufbringen der Magnetschicht einen extrem niedrigen Skew aufweist. Die Erfindung betrifft weiterhin ein Verfahren zum Herstellen der Folie und ihre Verwendung.

Biaxial orientierte Folien aus thermoplastischem Polyester, insbesondere aus Polyethylenterephthalat (PET), Polyethylennaphthalat (PEN), Polytertamethylenterephthalat (PBT) oder Polycyclohexandimethanolterephthalat, finden wegen ihrer überlegenen Eigenschaften wie Zugfestigkeit, ihrer Reissfestigkeit ihres Elastizitätsmoduls, ihrer Transparenz, ihrer chemischen und thermischen Beständigkeit und dergleichen Anwendung in großem Umfang auf vielen technischen Gebieten wie z.B. beim Einsatz als Trägerfolien für magnetische Aufzeichnungsmedien wie Audio-, Video- und Computerbänder sowie Floppy Disks, Thermodruckbänder, Kondensatoren, usw.

Die Polyesterfolien müssen für die verschiedenen Einsatzgebiete spezifische Anforderungen erfüllen, die üblicherweise mit Hilfe der Rohstoffrezepturen oder mittels bestimmter Verfahrenstechniken während der Folienherstellung eingestellt werden.

So werden z.B. bei Videobandträgerfolien neben einem gleichmäßigen und guten Gleitverhalten und hoher Abriebfestigkeit besonders hohe Anforderungen an die Homogenität der Oberfläche, an die Homogenität des statischen Verhaltens und an einen niedrigen Skew gestellt, weil unerwünschte Erhebungen auf der Oberfläche, elektrostatische Fehler, wie Statikmarken, hohe statische Aufladung und ein longitudinaler Schrumpf (Skew) innerhalb der nachfolgend auf diese Oberfläche aufgebrachten Magnetschicht zu Informationsverlusten und Störungen der elektromagnetischen Aufzeichnungen führen können und damit die technischen Einsatzmöglichkeiten des Informationsträgers beträchtlich einschränken.

Es gehört zum Stand der Technik, die genannten elektrostatischen Fehler und hohe elektrostatische Aufladung auf der Oberfläche durch Einarbeiten anorganischer und/oder organischer Inertpartikeln mit definierter Korngrößenverteilung zu überwinden, beziehungsweise abzumildern. Beispiele für derartige Inertpartikeln, die allein oder in Kombination eingesetzt werden können, sind $CaCO_3$, $TiO_2$, $Al_2O_3$, $ZrO_2$, $BaSO_4$, Calciumphosphat, Kaolin, $SiO_2$ oder natürliche und synthetische Silikate.

Zur Verbesserung ihrer Affinität zur Polymermatrix und damit zur Verbesserung der Qualität, d.h. des Eigenschaftsbildes der unter Verwendung dieser Inertpartikeln hergestellten Formkörper, werden diese Inertpartikeln in Abhängigkeit von ihrer chemischen Zusammensetzung einer Oberflächenbehandlung unterzogen.

Eine Darstellung der Möglichkeiten einer Oberflächenmodifizierung carbonatischer Füllstoffe mit dem Ziel, Einfluß auf die Wechselwirkungen in den Grenzflächen von speziell $CaCO_3$/Polymer zu nehmen, wird in Plaste und Kautschuk, 37. Jahrgang, Heft 8/1990, Seite 269 gegeben.

In der US-A-3,227,675 wird die Behandlung von "clays" (Kaolinen) mit Organosiliciumverbindungen zwecks besserer Einbindung in eine Polymermatrix beschrieben.

In der DE-A-35 34 143 werden monodisperse $SiO_2$-Partikeln beschrieben, die vorzugsweise für chromatographische Zwecke gedacht sind, deren auf der Oberfläche befindliche funktionelle Gruppen mit Organotrialkoxysilanen umgesetzt wurden, ohne dass die bisherigen Eigenschaften der Partikeln beeinträchtigt wurden.

Ein Verfahren zur Modifizierung von synthetischen silikatischen Füllstoffen mit schwefelhaltigen Organosiliciumverbindungen zwecks Verbesserung ihrer Einbindung in vulkanisierbare Kautschukmischungen wird in der EP-A-0 177 674 beschrieben.

In der US-A-4,567,030 werden ebenfalls monodisperse Mischoxidpartikeln beschrieben, die als "filler" verwendet werden können, deren Oberflächen zwecks Verbesserung der Feuchtigkeitsresistenz und der "Dispergierbarkeit in einem Harz", d.h. zwecks Reduzierung der Agglomeratbildung mit einem Aminopropyltrimethoxysilan oder Silanen, die ethylenisch ungesättigte Gruppen enthalten, modifiziert sein können.

In der EP-A-0 236 945 wird darauf hingewiesen, dass zur Reduzierung der Agglomeratbildung bei der Polymerisation zweckmäßigerweise die monodispersen Mischoxidpartikel einer Behandlung mit einem Silan-, Titan- oder Aluminium-Kopplungsreagenz unterzogen werden.

In all diesen Schriften werden keine Wege aufgezeichnet, wie der longitudinale Schrumpf (Skew) reduziert oder vermieden werden kann.

Skew ist eine polyesterspezifische Eigenschaft. Skew ist ein longitudinaler Schrumpf, d.h. ein Schrumpf in Längsrichtung der Folie nach ihrer Herstellung, der durch Spannungserlebnisse der Folie nach der Thermofixierung entsteht.

Aufgabe der Erfindung war es deshalb eine wenigstens einschichtige, biaxial orientierte Polyesterfolie mit einer Gesamtdicke von 4 bis 25 μm zur Verfügung zu stellen, die sich dadurch auszeichnet, dass die Trägerfolie nach dem Aufbringen der Magnetschicht eine exzellente Bildwiedergabe liefert.

Gelöst wird diese Aufgabe durch eine ein- oder mehrschichtige biaxial orientierte Folie, die überwiegend aus einem kristallisierbaren, thermoplastischen Polyester aufgebaut ist, mit einer Gesamtdicke im Bereich von 4 bis 25

μm, deren Kennzeichenmerkmal darin zu sehen ist, dass der Skew der beschichteten Magnetbandfolie aus Trägerfolie und Magnetbeschichtung bei kleiner/gleich 1 ‰, vorzugsweise kleiner/gleich 0,8 ‰, insbesondere kleiner/gleich 0,7 ‰, liegt.

Ein Skew der beschichteten Magnetfolie von ≥ 2,0 ‰ führt zu Informationsverlusten und Störungen der elektromagnetischen Eigenschaften. Der Informationsträger ist technisch unbrauchbar.

Ein Skew der beschichteten Magnetbandfolie zwischen 2,0 ‰ und 1 ‰ führt zu Bildverzerrungen bei Videoaufzeichnungen, d.h. der Informationsträger ist nur bedingt einsetzbar.

Ein Skew der beschichteten Magnetbandfolie ≤ 1 ‰, vorzugsweise ≤ 0,8 ‰ und insbesondere ≤ 0,7 ‰ führt zu einem Informationsträger, der eine exzellente Bildwiedergabe liefert. In aller Regel liegt der Skew der unbeschichteten Folie um 0,2 ‰ kleiner als der Skew der beschichteten Folie.

Die Folien nach der vorliegenden Erfindung können ein- oder mehrschichtig sein, sie können symmetrisch oder asymmetrisch aufgebaut sein, wobei verschieden rezepturierte, d.h. mit zusätzlichen Additiven ausgestattete, beziehungsweise rezepturierte oder nicht rezepturierte Polyester oder solche gleicher chemischer Zusammensetzung, jedoch mit unterschiedlichem Molekulargewicht und verschiedener Viskosität, durch Koextrusion vereinigt werden können.

Die erfindungsgemäße Folie besteht im wesentlichen aus einem kristallisierbaren Polyethylenterephthalat (PET), aus einem kristallisierbarem Polyethylennaphthalat (PEN) oder Mischung daraus.

Unter kristallisierbarem PET oder kristallisierbarem PEN werden

- kristallisierbare Homopolymere
- kristallisierbare Compounds
- kristallisierbare Copolymere
- kristallisierbares Recyklat
- andere Variationen der kristallisierbaren Polyester verstanden.

Die Herstellung der Polyester kann sowohl nach dem Umesterungsverfahren, z. B. mit Hilfe von Umesterungskatalysatoren wie z. B. Zn-, Mg-, Ca-, Mn-, Li- oder Ge-Salzen, wie auch nach dem Direktesterverfahren (PTA-Verfahren) erfolgen, bei dem Antimonverbindungen als Polykondensationskatalysatoren und Phosphorverbindungen als Stabilisatoren verwendet werden. Der IV-Wert (intrinsische Viskosität) der Polyester liegt vorzugsweise im Bereich von 0,5 bis 1,0 dl/g.

Beispiele für Polyester sind Polykondensate aus Terephthalsäure, Isophthalsäure oder 2,6-Naphthalindicarbonsäure mit Glykolen mit 2 bis 10 Kohlenstoffatomen wie Polyethylenterephthalat, Polybuthylenterephthalat, Poly-1,4-cyclohexylen-dimethylenterphthalat, Polyethylen-2,6naphthalindicarboxylat, Polyethylennaphthalat/Bibenzoat oder Polyethylen-p-hydroxy-benzoat.

Die Polyester können bis zu 50 mol-%, insbesondere bis zu 30 mol-%, aus Comonomereinheiten aufgebaut sein, wobei eine Variation in der Glykol- und/oder der Säurekomponente möglich ist. Als Säurekomponente können die Copolyester u. a. 4,4-Bibenzoesäure, Adipinsäure, Glutarsäure, Bernsteinsäure, Sebazinsäure, Phtalsäure, Isophthalsäure, 5-Na-sulfoisophthalsäure oder polyfunktionelle Säuren wie Trimelithsäure u. a. enthalten.

Die Polyesterfolien können nach bekannten Verfahren aus einem Polyesterrohstoff mit ggf. weiteren Rohstoffen und/oder weiteren für technische Folien üblichen Additiven in üblichen Mengen von 0,1 bis maximal 20 Gew.-% sowohl als Monofolie wie auch als mehrschichtige, ggf. Koextrudierte Folien mit gleichen oder unterschiedlich ausgebildeten Oberflächen hergestellt werden, wobei eine Oberfläche beispielsweise pigmentiert ist und die andere Oberfläche kein oderweniger Pigment enthält. Ebenso können eine oder beide Oberflächen der Folie nach bekannten Verfahren mit einer üblichen funktionalen Beschichtung versehen werden.

Im Rahmen von Versuchen, den Skewzu reduzieren, wurde die Zugspannung beim Aufrollen der Folie reduziert, weil hohe Züge und Zugschwankungen beim Aufrollen oft Verdehnungen in der Folie erzeugen. Geringe Zugspannungen beim Aufrollen führten jedoch zu einem weichen Wickelaufbau und den damit verbundenen Rollenaufmachungsproblemen, wie Teleskopieren und insbesondere Statikmarken, die ebenfalls die Bildqualität stark negativ beeinflussen und letztlich zur Unbrauchbarkeit der Folie führen.

Die Erfindung betrifft daher auch ein neuartiges Verfahren zum Herstellen der biaxial orientierten Folie aus thermoplastischem Polyester mit niedrigem Skew, bei dem der thermoplastische Polyester in einem Extruder aufgeschmolzen, durch eine Breitschlitzdüse extrudiert und anschließend zur Vorfolie abgeschreckt, die Vorfolie gestreckt, die gestreckte Folie thermofixiert und die thermofixierte Endfolie gesäumt und aufgewickelt wird, dessen Kennzeichenmerkmal darin zu sehen ist, dass die Folie nach dem Aufwickeln einer Alterung unterzogen wird.

Bei dem bevorzugten Extrusionsverfahren zum Herstellen der Polyesterfolie wird das aufgeschmolzene Polyestermaterial durch eine Breitschlitzdüse extrudiert und als weitgehend amorphe Vorfolie auf einer Kühlwalze abgeschreckt. Diese Vorfolie wird anschließend erneut erhitzt und in Längs- und Querrichtung bzw. in Quer- und Längsrichtung bzw. in Längs-, Quer- und nochmals in Längsrichtung und/oder Querrichtung gestreckt. Die Strecktemperaturen liegen im allgemeinen im Bereich von $T_g$ +10 K bis $T_g$ +60 K ($T_g$ = Glasübergangstemperatur), das Streckverhältnis der Längsstreckung liegt im Bereich von 2 bis 6, insbesondere von 3 bis 4,5 das der Querstreckung im Bereich von 2 bis 5, insbesondere von 3 bis 4,5 und das der ggf. durchgeführten zweiten Längsstreckung im Bereich von 1,1 bis 3. Die erste Längsstreckung kann ggf. gleichzeitig mit der Querstreckung (Simultanstreckung) durchgeführt werden. Anschließend folgt die Thermofixierung der Folie in einem Fixierrahmen bei Rahmentemperaturen im Bereich von 150 bis 250 °C, insbesondere von 170 bis 240 °C.

Die Alterung geschieht erfindungsgemäß durch Lagern der aufgewickelten Folie über eine Zeitdauer von wenigstens 30 Tagen bei Umgebungstemperatur, vorzugsweise von wenigstens 35 Tagen, besonders bevorzugt von wenigstens 40 Tagen, ebenfalls bei Umgebungstemperatur. Die Zeitdauer der Alterung kann erfindungsgemäß allerdings auch reduziert werden, wenn die Temperatur, bei der die Alterung durchgeführt wird, erhöht wird.

Es war für die Fachwelt mehr als überraschend, dass die Alterung durch gezielte Lagerung der unbeschichteten Folienrolle ggf. unter Wärmeeinwirkung den Skew der später mit Magnetschicht beschichteten Folie reduziert.

Eine nur einen Tag alte PET-Folienrolle zeigt nach der Beschichtung mit Magnetschicht Skew-Werte im Bereich von 1,5 ‰ bis zu 1,8 ‰ (Promille). Andere PET-Folienrollen, die über eine Zeitdauer von 20 Tagen bei einer Temperatur von 10 °C gelagert worden waren, zeigten nach der Beschichtung mit Magnetschicht einen Skew von 1,2 ‰. bis 1,4 ‰

PET-Folienrollen, die länger als 50 Tage bei einer Temperatur von 10 °C gelagert wurden, zeigten nach der Beschichtung Skew-Werte zwischen 0,4 ‰ und 0,6 ‰.

Andere PET-Folienrollen, die über eine Zeitdauer von nur 4 Tagen bei einer Temperatur von 50 °C gelagert wurden, zeigten nach der Beschichtung mit Magnetschicht hervorragende Skew-Werte zwischen 0,2 ‰ und 0,35 ‰.

Bei der Thermobehandlung ist allerdings darauf zu achten, dass die Folie möglichst langsam abgekühlt wird, weil durch schnelle Temperaturänderungen neue Spannungen in dem Folienwickel entstehen können und so Skew neu aufgebaut wird.

Weiter sollten nach der Alterung bei erhöhter Temperatur zusätzliche Temperaturschocks, insbesondere Kälteschocks, möglichst vermieden werden. Im Falle von Kälteschocks bauen sich nämlich zunächst in den äußeren Folienlagen starke Spannungen auf.

Ideale Temperaturen für die erfindungsgemäße Alterung liegen bei mindestens bei 10 K, vorzugsweise 20 K und insbesondere 25 K unter der Glasübergangstemperatur $T_g$ des eingesetzten Polyesters.

Nach der Konfektionierung (dem Aufwickeln) zu Kundenrollen werden diese Rollen erfindungsgemäß über eine Zeitdauer von mindestens 4 Tagen bei einer Temperatur von 50 °C oder über eine Zeitdauer von wenigstens 15 Tagen bei einer Temperatur von 30 °C oder über eine Zeitdauer von wenigstens 40 Tagen bei Temperaturen zwischen 10 °C und 20 °C gelagert, so dass sich der Skew der später beschichteten Folien in dem erfindungsgemäßen Bereich einstellt.

Durch die erfindungsgemäße Eigenschaft eines besonders niedrigen Skew-Wertes eignet sich die Folie gemäß der Erfindung insbesondere als Trägerfolie für Videoaufzeichnungen und für Computerbänder mit hoher Datendichte.

Die Erfindung wird im folgenden anhand von Ausführungsbeispielen für den Fachmann noch näher erläutert.

Die Messung der einzelnen Eigenschaften erfolgt dabei gemäß der folgenden Normen bzw. Verfahren.

**Skew**

Folienstreifen mit einer Breite von 1,2 cm (½ Zoll) werden vertikal aufgehängt, und mit einer Kraft von 0,1 N nach unten gezogen. Unter dieser Belastung wird die Länge des Folienstreifens bei Umgebungstemperatur (23 °C) genau bestimmt. Die Folienstreifen werden dann unter Belastung von 0,1 N über eine Zeitdauer von 18 Stunden bei 50 °C in einem Ofen wärmebehandelt. Die relative Luftfeuchtigkeit der dem Ofen zugeführten Luft beträgt 50 % bei einer Temperatur von 23 °C.

Nach Entnahme aus dem Ofen werden die Folienstreifen wieder auf Umgebungstemperatur (23 °C) abgekühlt und nach einer Wartezeit von 1 h wird die Länge der Streifen gemessen. Die während der Wärmebehandlung entstandene relative Längenänderung ist der Skew-Wert.

Mit dieser Messung kann sowohl der Skew der unbeschichteten als auch der Skew der beschichteten Folie bestimmt werden.

**Mittlere Dicke**

Die mittlere Dicke $d_F$ wird bei bekannter Länge, Breite und Dichte einer Folie aus deren Gewicht (richtig: Masse) bestimmt. Gemessen wird das Gewicht eines auf dem Zuschneidetisch vorbereiteten Folienstreifens, der aus der Mitte eines sich über die gesamte Rollenbreite erstreckenden Musters genommen wird. Die Berechnung von $d_F$ erfolgt dann über die Beziehung (Dimensionen beachten):

$$d_F\ (\mu m) = \frac{m[g]}{l[mm] \cdot b[mm] \cdot d[g/cm^3]} \cdot 10^6$$

wobei gilt:

m = Masse des untersuchten Folienstücks
l = Länge der Probe
b = Breite der Probe
d = Dichte des untersuchten Materials

d = für Polyester 1,395 g/cm$^3$

Die einzelnen Probestreifen werden nach dem Zuschneiden auf einer Analysenwaage Mettler PM 200 (Höchstlast 200g) verwogen. Ein daran angeschlossener Computer vom Typ HP Vectra ES/12 übernimmt nach Eingabe von Maschine, Rollennummer alle Parameter aus dem OPUS Programm und errechnet damit die mittlere Dicke.

**IV-Wert (DCE)**

Die Standardviskosität SV (DCE) wird, angelehnt an DIN 53726, in Dichloressigsäure gemessen. Die intrinsische Viskosität (IV) berechnet sich wie folgt aus der Standardviskosität

$$IV\ (DCE) = 6{,}67 \cdot 10^{-4}\ SV\ (DCE) + 0{,}118.$$

**Glasübergangstemperatur T$_g$**

Die Glasübergangstemperatur T$_g$ wird mit einem Pyres 1 DSC (Differential Scanning Caloriemeter) der Fa. Perkin Elmer bestimmt. Der Glasübergang ist die mittlere Temperatur der stufenweisen Änderung der Wärmekapazität.

**Beispiel 1**

Chips aus Polyethylenterephthalat (hergestellt über das Umesterungsverfahren mit Mn als Umesterungskatalysator, Mn-Konzentration 100 ppm) mit einem SV-Wert von 810, die eine Menge von 3000ppm an CaCO$_3$-Partikeln mit einem mittleren Teilchendurchmesser von 0,7 μm enthielten, wurden bei einer Temperatur von 160 °C auf eine Restfeuchte von 50 ppm getrocknet und danach einem Extruder zugeführt. Durch anschließendes stufenweises Strekken in Längs- und in Querrichtung und anschließendes Thermofixieren wurde eine einschichtige, 13 μm dicke Folie mit einer Maschinengeschwindigkeit von 350m/min hergestellt. Die Folie wurde danach zu einer Originalrolle mit 46.000 m Lauflänge aufgewickelt.

Die Originalrolle wurde anschließend zu Kundenrollen mit einer Breite von 646 mm und einer Lauflänge von 23.000 m konfektioniert. Die unbeschichteten Kundenrollen wurden über eine Zeitdauer von 4 Tagen bei einer Temperatur von 50 °C gelagert und anschließend langsam über eine Zeitdauer von 24 h auf Umgebungstemperatur (23 °C) abgekühlt. Der resultierende Skew-Wert der unbeschichteten und der mit Magnetschicht beschichteten Folie sind in Tabelle 1 dargestellt.

**Beispiel 2**

Beispiel 1 wurde wiederholt. In Abänderung zur Beispiel 1 wurde aber über die Coextrusionstechnologie eine dreischichtige ABA-Folie hergestellt, wobei B eine 11 μm dicke Basisschicht und A jeweils 1 μm dicke Deckschichten, die die Basisschicht beidseitig überzogen, repräsentierten.

Der Polyesterrohstoff für die Deckschichten war identisch mit dem Polyesterrohstoff für die Basisschicht in Beispiel 1.

Die Folie wurde entsprechend Beispiel 1 zu Kundenrollen konfektioniert, die über eine Zeitdauer von 15 Tagen bei einer Temperatur von 30 °C gelagert und anschließend innerhalb von 12 h auf Zimmertemperatur abgekühlt wurden. Die Skew-Werte der Folie aus Beispiel 2 sind in Tabelle 1 angegeben.

**Vergleichsbeispiel 1**

Beispiel 1 wurde wiederholt. In Abänderung zu Beispiel 1 wurden aber die Kundenrollen über eine Zeitdauer von 4 Tagen bei einer Temperatur von 10 °C gelagert.

Die Skew-Werte der Folie aus Vergleichsbeispiel 1 befinden sich in Tabelle 1.

**Vergleichsbeispiel 2**

Beispiel 2 wurde wiederholt. In Abänderung zu Beispiel 2 wurden die Kundenrollen über eine Zeitdauer von 15 Tagen bei einer mittleren Temperatur von 10 °C im Freien gelagert.

Die Skew-Werte, die an der Folie nach Vergleichsbeispiel 2 gemessen wurden, sind ebenfalls in Tabelle 1 angegeben.

Tabelle 1

|  | Foliendicke | Skew-Wert der unbeschichteten Folie | Skew-Wert der beschichteten Folie, d.h. nach Aufbringen der Magnetschicht |
|---|---|---|---|
|  | (µm) | ‰ | ‰ |
| Beispiel 1 | 13 | 0,10 | 0,3 |
| Beispiel 2 | 13 | 0,05 | 0,25 |
| Vergleichsbeispiel 1 | 13 | 1,4 | 1,6 |
| Vergleichsbeispiel 2 | 13 | 1,1 | 1,3 |

Die Gegenüberstellung macht deutlich, dass die erfindungsgemäß hergestellten, der vorstehend beschriebenen Alterung unterzogenen Folien Skew-Werte innerhalb des erfindungsgemäß beanspruchten Bereiches erreichten, während die Folien nach den Vergleichsversuchen, die einer anders gestalteten Alterung unterworfen wurden, zu einer schlechteren Qualität führten.

**Patentansprüche**

1. Ein- oder mehrschichtige biaxial orientierte Folie, die überwiegend aus einem kristallisierbaren, thermoplastischen Polyester aufgebaut ist, mit einer Gesamtdicke im Bereich von 4 bis 25 µm, **dadurch gekennzeichnet, dass** die mit einer Magnetbeschichtung beschichtete Folie einen Skew-Wert von kleiner/gleich 1 ‰, vorzugsweise kleiner/gleich 0,8 ‰, insbesondere kleiner/ gleich 0,7 ‰, besitzt.

2. Folie nach Anspruch 1, **dadurch gekennzeichnet, dass** sie mehrschichtig ist und symmetrisch oder asymmetrisch aufgebaut ist, wobei verschieden rezepturierte oder rezepturierte und nicht rezepturierte Polyester oder Polyester gleicher chemischer Zusammensetzung, aber mit unterschiedlicher Molmasse und verschiedener Viskosität, durch Coextrusion vereinigt sind.

3. Folie nach Anspruch 1 oder 2, **dadurch gekennzeichnet, dass** der Polyester für die Folie einen IV-Wert im Bereich von 0,5 bis 1,0 dl/g besitzt.

4. Folie nach einem der Ansprüche 1 bis 3, **dadurch gekennzeichnet, dass** der Polyester ausgewählt ist aus der Gruppe der Polykondensate aus Terephthalsäure, Isophthalsäure oder 2,6-Naphthalindicarbonsäure mit Glykolen mit 2 bis 10 Kohlenstoffatomen wie Polyethylenterephthalat, Polybuthylenterephthalat, Poly-1,4-cyclohexylen-dimethylenterphthalat, Polyethylen-2,6-naphthalindicarboxylat, Polyethylennaphthalat/Bibenzoat oder Polyethylen-p-hydroxy-benzoat.

5. Folie nach einem der Ansprüche 1 bis 4, **dadurch gekennzeichnet, dass** der Polyester eine Menge bis zu 50 mol-%, insbesondere bis zu 30 mol-%, an Comonomereinheiten enthält, wobei als Säurekomponente Comonomereinheiten wie 4,4-Bibenzoesäure, Adipinsäure, Glutarsäure, Bernsteinsäure, Sebazinsäure, Phtalsäure, Isophthalsäure, 5-Na-sulfoisophthalsäure oder polyfunktionelle Säuren wie Trimelithsäure enthalten sind.

6. Folie nach einem oder mehreren der Ansprüche 1 bis 5, **dadurch gekennzeichnet, dass** sie weitere Additive in Mengen im Bereich von 0,1 bis maximal 20 Gew.-% enthält.

7. Verfahren zum Herstellen einer biaxial orientierten Folie aus thermoplastischem Polyester nach einem der Ansprüche 1 bis 6, bei dem der thermoplastische Polyester in einem Extruder aufgeschmolzen, durch eine Breitschlitzdüse extrudiert und anschließend zur Vorfolie abgeschreckt, die Vorfolie gestreckt, die gestreckte Folie thermofixiert und die thermofixierte Endfolie gesäumt und aufgewickelt wird, **dadurch gekennzeichnet, dass** die Folie nach dem Aufwickeln einer Alterung unterzogen wird.

8. Verfahren nach Anspruch 7, **dadurch gekennzeichnet, dass** die Vorfolie zum Strecken erneut erhitzt und in Längs- und Querrichtung bzw. in Quer- und Längsrichtung bzw. in Längs-, Quer- und nochmals in Längsrichtung und/ oder Querrichtung gestreckt wird, wobei die Strecktemperaturen im Bereich von $T_g$ + 10 K bis $T_g$ + 60 K ($T_g$ = Glasübergangstemperatur) liegen, wobei das Streckverhältnis der Längsstreckung im Bereich von 2 bis 6 liegt, insbesondere von 3 bis 4,5 das der Querstreckung im Bereich von 2 bis 5, insbesondere von 3 bis 4,5 und das der ggf. durchgeführten zweiten Längsstreckung im Bereich von 1,1 bis 3.

9. Verfahren nach Anspruch 7 oder 8, **dadurch gekennzeichnet, dass** nach dem Strecken die Thermofixierung der Folie in einem Fixierrahmen bei Rahmentemperaturen im Bereich von 150 bis 250 °C durchgeführt wird, insbesondere von 170 bis 240 °C.

10. Verfahren nach einem der Ansprüche 7 bis 9, **dadurch gekennzeichnet, dass** die Alterung durch Lagern der aufgewickelten Folie über eine Zeitdauer von wenigstens 30 Tagen bei Umgebungstemperatur, vorzugsweise von wenigstens 35 Tagen bei Umgebungstemperatur, besonders bevorzugt von wenigstens 40 Tagen bei Umgebungstemperatur, geschieht.

11. Verfahren nach einem der Ansprüche 7 bis 10, **dadurch gekennzeichnet, dass** die Alterung bei erhöhter Temperatur vorgenommen wird.

12. Verfahren nach Anspruch 11, **dadurch gekennzeichnet, dass** proportional zur Erhöhung der Temperatur bei der Alterung die Zeitdauer der Lagerung reduziert wird.

13. Verfahren nach Anspruch 11 oder 12, **dadurch gekennzeichnet, dass** nach dem Aufwickeln der gesäumten, thermofixierten Endfolie zu Rollen diese Rollen über eine Zeitdauer von mindestens 4 Tagen bei einer Temperatur von 50 °C oder über eine Zeitdauer von wenigstens 15 Tagen bei einer Temperatur von 30 °C oder über eine Zeitdauer von wenigstens 40 Tagen bei Temperaturen zwischen 10 °C und 20 °C gelagert werden.

14. Verwendung einer Folie nach einem der Ansprüche 1 bis 6 als Trägerfolie für Videoaufzeichnungen und für Computerbänder mit hoher Datendichte.